# EUROPEAN PATENT SPECIFICATION

(11) **EP 2 760 118 B1**
(45) Date of publication and mention of the grant of the patent: **10.06.2020**
(21) Application number: 14152475.1
(22) Date of filing: 24.01.2014
(51) Int. Cl.: H02M 3/158, H02M 1/00, H02J 1/10, H02M 3/156, H02J 3/38, H02M 7/5387

(54) **Power conditioner, photovoltaic system, and abnormality determination method**
Umrichter, Photovoltaiksystem und Abweichungsbestimmungsverfahren
Conditionneur d'énergie, système photovoltaïque et procédé de détermination d'anomalie

(30) Priority: 24.01.2013 JP 2013011542; 06.11.2013 JP 2013230411
(43) Date of publication of application: 30.07.2014
(73) Proprietor: OMRON CORPORATION, Kyoto-shi, Kyoto 600-8530 (JP)
(72) Inventor: Tsubota, Yasuhiro, Kyoto-shi, Kyoto 600-8530 (JP); Mabuchi, Masao, Kyoto-shi, Kyoto 600-8530 (JP); Nakamura, Kotaro, Kyoto-shi, Kyoto 600-8530 (JP); Nakai, Takuya, Kyoto-shi, Kyoto 600-8530 (JP)
(74) Representative: Isarpatent

(56) References cited:
- CN-A- 102 608 512
- US-A1- 2008 094 867
- MYRZIK J M A ET AL: "String and module integrated inverters for single-phase grid connected photovoltaic systems - a review", CONFERENCE PROCEEDINGS / 2003 IEEE BOLOGNA POWER TECH : JUNE 23 - 26, 2003, FACULTY OF ENGINEERING, UNIVERSITY OF BOLOGNA, BOLOGNA, ITALY, PISCATAWAY, NJ : IEEE SERVICE CENTER, US, vol. 2, 23 June 2003 (2003-06-23), pages 1-8, XP002523862, ISBN: 978-0-7803-7967-1

## Description

### TECHNICAL FIELD

The present invention relates to a power conditioner, a photovoltaic system, and an abnormality determination method.

### RELATED ART

Sometimes a short-circuit current value of a power supply such as a photovoltaic cell is used as a parameter to determine whether the power supply has an abnormality. In a photovoltaic power system disclosed in Japanese Unexamined Patent Publication No. 2001-257377 , a closed circuit of a string in which a plurality of photovoltaic modules are connected in series is formed through a transistor connected in parallel to the string, and the short-circuit current value of the string is detected.

The following documents relate to further technological background of the present invention:

| | |
|---|---|
| D1 | US 2008/094867 A1 (MULLER BURKARD [DE] ET AL) 24 April 2008 (2008-04-24) |
| D2 | CN 102 608 512 A (UNIV SHANGHAI ELECTRIC POWER) 25 July 2012 (2012-07-25) |
| D3 | MYRZIK J M A ET AL: "String and module integrated inverters for single-phase grid connected photovoltaic systems - a review", CONFERENCE PROCEEDINGS / 2003 IEEE BOLOGNA POWER TECH: JUNE 23 - 26, 2003, FACULTY OF ENGINEERING, UNIVERSITY OF BOLOGNA, BOLOGNA, ITALY, PISCATAWAY, NJ : IEEE SERVICE CENTER, US, vol. 2, 23 June 2003 (2003-06-23), pages 1-8, XP002523862, ISBN: 978-0-7803-7967-1 |

Document D1 discloses a power conditioner that boosts a direct current outputted from a first power supply and the power conditioner converts the boosted direct current into an alternating current and outputs the converted alternating current to a system power supply. The power conditioner comprises a first boost circuit, an inverter, a connection unit configured to connect an output side of the first boost circuit and an input side of the inverter, a controlling of the voltage at the connection unit and the generation of a short-circuit between the output terminals of the first power supply to form a first closed circuit of the first power supply. Further, a short-circuit current value acquisition unit is used to acquire a first short-circuit current value passing through the first closed circuit during a period and a buffer capacitor is connected to a DC bus between the first boost circuit and the inverter.

Document D2 discloses fault detection based on voltage waveform comparison.

### SUMMARY

The object of the present invention is to provide a power conditioner and an abnormality determination unit to detect the short-circuit current value of the power supply such as the photovoltaic cell without adding a new circuit such as the transistor. This object is solved by a power conditioner of claim 1 and an abnormality determination unit according to claim 12. Further advantageous embodiments and improvements of the present invention are listed in the dependent claims. Hereinafter, before coming to detailed discussion of the embodiments of the invention with reference to the attached drawings, some aspects of the invention which contribute to the understanding of the invention are discussed separately below.

In accordance with a first aspect of the present invention, a power conditioner that boosts a direct current outputted from a first power supply, converts boosted direct current into an alternating current, and outputs the converted alternating current to a system power supply. The power conditioner includes: a first boost circuit that includes a first switch connected between output terminals of the first power supply and is configured to boost the direct current from the first power supply by turning on and off the first switch; an inverter configured to convert the direct current outputted from the first boost circuit into the alternating current; a connection unit configured to connect an output side of the first boost circuit and an input side of the inverter; a controller configured to turn on the first switch while setting the output side of the first boost circuit to a voltage higher than a voltage on the input side of the first boost circuit by controlling the voltage at the connection unit, and to generate a short-circuit between the output terminals of the first power supply to form a first closed circuit of the first power supply; a short-circuit current value acquisition unit configured to acquire a first short-circuit current value passing through the first closed circuit during a period, when the controller turns on the first switch while setting the output side of the first boost circuit to the voltage higher than the voltage on the input side of the first boost circuit by controlling the voltage at the connection unit; and a power supply abnormality determination unit configured to determine whether the first power supply has an abnormality based on comparison between the first short-circuit current value and a first reference current value, the first reference current value being previously fixed based on a characteristic of the first power supply.

In the power conditioner, the first boost circuit may further include a first backflow prevention circuit configured to prevent inflow of a current from the output side of the first boost circuit.

The power conditioner may further include a second boost circuit that includes a second switch connected between output terminals of a second power supply and is configured to boost the direct current from the second power supply by turning on and off the second switch. In the power conditioner, a connection unit connects the output side of the first boost circuit and an output side of the second boost circuit in parallel to each other; and the controller may turn on and off the second switch to control the voltage at the connection unit, and set the output side of the first boost circuit to the voltage higher than the voltage on the input side of the first boost circuit.

In the power conditioner, the controller may control the inverter to control the voltage at the connection unit, and set the output side of the first boost circuit to the voltage higher than the voltage on the input side of the first boost circuit, when the controller turns on and off the second switch to control the voltage at the connection unit and cannot set the output side of the first boost circuit to the voltage higher than the voltage on the input side of the first boost circuit.

In the power conditioner, the controller may turn on and off the first switch to control the voltage at the connection unit, turn on the second switch while setting the output side of the second boost circuit to the voltage higher than the voltage on the input side of the second boost circuit, and generate the short-circuit between the output terminals of the second power supply to form a second closed circuit of the second power supply, the short-circuit current value acquisition unit may acquire a second short-circuit current value passing through the second closed circuit during a period, when the controller turns on and off the first switch to control the voltage at the connection unit and turns on the second switch while setting the output side of the second boost circuit to the voltage higher than the voltage on the input side of the second boost circuit, and the power supply abnormality determination unit may determine whether the second power supply has the abnormality based on comparison between the second short-circuit current value and a second reference current value, the second reference current value being previously fixed based on a characteristic of the second power supply.

In the power conditioner, the second boost circuit may further include a second backflow prevention circuit configured to prevent inflow of the current from the output side of the second boost circuit.

In the power conditioner, the controller may control the inverter to output a power from the system power supply onto the side of the connection unit, and control the voltage at the connection unit to set the output side of the first boost circuit to the voltage higher than the voltage on the input side of the first boost circuit.

In accordance with a second aspect of the present invention, a photovoltaic system includes: a first photovoltaic cell that is the first power supply; and the power conditioner configured to convert the direct current outputted from the first photovoltaic cell into the alternating current and to output the alternating current onto the side of the system power supply.

In accordance with a third aspect of the present invention, a photovoltaic system includes: a first photovoltaic cell that is of the first power supply; a second photovoltaic cell that is of the second power supply connected in parallel to the first photovoltaic cell; and the power conditioner configured to convert the direct currents outputted from the first and second photovoltaic cells into the alternating currents and to output the alternating currents onto the side of the system power supply.

In accordance with a fourth aspect of the present invention, an abnormality determination method for determining an abnormality of a first power supply connected to a power conditioner, the power conditioner including a first boost circuit that includes the first switch connected between output terminals of the first power supply and is configured to boost the direct current from the first power supply by turning on and off the first switch, an inverter configured to convert the direct current outputted from the first boost circuit into the alternating current, and a connection unit configured to connect an output side of the first boost circuit and an input side of the inverter; the power conditioner boosting the direct current outputted from the first power supply, converting the boosted direct current into an alternating current, and outputting the converted alternating current onto a side of a system power supply, and the abnormality determination method includes: a step of turning on the first switch while setting the output side of the first boost circuit to a voltage higher than a voltage on the input side of the first boost circuit by controlling the voltage at the connection unit, and generating a short-circuit between the output terminals of the first power supply to form a first closed circuit of the first power supply; a step of acquiring a first short-circuit current value passing through the first closed circuit in a period, during which the first switch is turned on while setting the output side of the first boost circuit to the voltage higher than the voltage on the input side of the first boost circuit by controlling the voltage at the connection unit; and a step of determining whether the first power supply has an abnormality based on comparison between the first short-circuit current value and a first reference current value, the first reference current value being previously fixed based on a characteristic of the first power supply.

In the abnormality determination method, the power conditioner may further include a second boost circuit that includes a second switch connected between output terminals of a second power supply and is configured to boost the direct current from the second power supply by turning on and off the second switch, the connection unit may connect the output side of the first boost circuit and the output side of the second boost circuit in parallel to each other; and, in the first closed circuit forming step, the second switch may be turned on and off to control the voltage at the connection unit, and the output side of the first boost circuit may be set to the voltage higher than the voltage on the input side of the first boost circuit.

In the abnormality determination method, in the first closed circuit forming step, the inverter may be controlled to control the voltage at the connection unit, and the output side of the first boost circuit may be set to the voltage higher than the voltage on the input side of the first boost circuit, when the second switch cannot be turned on and off to control the voltage at the connection unit and when the output side of the first boost circuit cannot be set to the voltage higher than the voltage on the input side of the first boost circuit.

The abnormality determination method may further include a step of turning on and off the first switch to control the voltage at the connection unit, turning on the second switch while setting the output side of the second boost circuit to the voltage higher than the voltage on the input side of the second boost circuit, and generating the short-circuit between the output terminals of the second power supply to form a second closed circuit of the second power supply; a step of acquiring a second short-circuit current value passing through the second closed circuit in a period, during which the first switch is turned on and off to control the voltage at the connection unit and the second switch is turned on while the output side of the second boost circuit is set to the voltage higher than the voltage on the input side of the second boost circuit, and a step of determining whether the second power supply has the abnormality based on comparison between the second short-circuit current value and a second reference current value, the second reference current value being previously fixed based on a characteristic of the second power supply.

All the features necessary for the present invention are not described in the summary of the present invention. A sub-combination of a feature group is also included in the present invention.

### BRIEF DESCRIPTION OF THE DRAWINGS

Fig. 1 is a system configuration diagram illustrating an example of an entire configuration of a photovoltaic system according to an embodiment;
Fig. 2 is a view illustrating an example of a functional block of a control device of the embodiment;
Fig. 3 is a flowchart illustrating an example of a procedure in which the control device determines whether a photovoltaic string has an abnormality;
Fig. 4 is a flowchart illustrating an example in which a switch controller controls a voltage at a connection unit such that the voltage is greater than or equal to a voltage on an input side of a boost circuit connected to the photovoltaic string of a determination target;
Fig. 5 is a system configuration diagram illustrating an example of an entire configuration of a photovoltaic system according to a modification of the embodiment; and
Fig. 6 is a flowchart illustrating an example of a procedure in which a control device of the modification of the embodiment determines whether a photovoltaic string has an abnormality.

### DETAILED DESCRIPTION

Hereinafter, an embodiment of the present invention will be described. However, the present invention according to the claims is not limited to the embodiment. All combinations of features described in the embodiment are not necessary for the means for solving the problem of the invention.

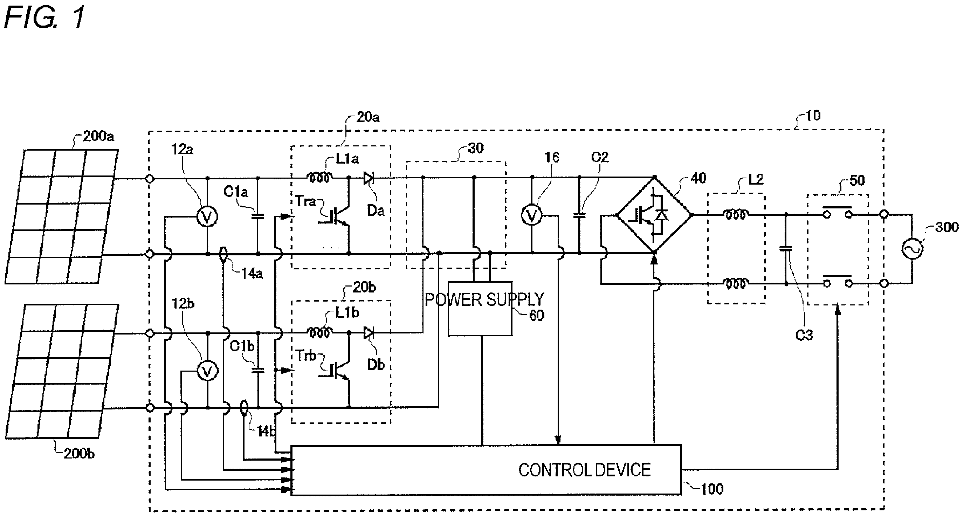

Fig. 1 is a system configuration diagram illustrating an example of an entire configuration of a photovoltaic system of the embodiment. The photovoltaic system includes photovoltaic strings 200a and 200b and a power conditioner 10. Each of the photovoltaic strings 200a and 200b includes a plurality of photovoltaic modules connected in series. The photovoltaic strings 200a and 200b are examples of the first power supply and the second power supply, each of which outputs a DC voltage. The first power supply and the second power supply may be a photovoltaic cell, a photovoltaic module in which the photovoltaic cells are connected in series or parallel, or a power supply such as a fuel cell..

The power conditioner 10 boosts the DC voltages outputted from the photovoltaic strings 200a and 200b, converts the boosted DC voltages into AC voltages, and outputs the AC voltages onto a side of a system power supply 300.

The power conditioner 10 includes capacitors C1a and C1b, boost circuits 20a and 20b, a connection unit 30, a capacitor C2, an inverter 40, a coil L2, a capacitor C3, a connected relay 50, a power supply 60, and a control device 100.

Both ends of the capacitor C1a are electrically connected to a positive electrode terminal and a negative electrode terminal of the photovoltaic string 200a, respectively, and the capacitor C1a smoothes the DC voltage outputted from the photovoltaic string 200a. The boost circuit 20a includes a coil L1a, a switch Tra, and a diode Da. The boost circuit 20a is called a chopper switching regulator.

The switch Tra is an example of the first switch connected between the positive electrode terminal and the negative electrode terminal of the photovoltaic string 200a. For example, the switch Tra may be an Insulated Gate Bipolar Transistor (IGBT). One end of the coil L1a is connected to one end of the capacitor C1a, and the other end of the coil L1a is connected to a collector of the switch Tra. The collector of the switch Tra is connected to an anode of the diode Da, and an emitter of the switch Tra is connected to the other end of the capacitor C1a. The coil L1a accumulates energy based on power from the photovoltaic string 200a during an on period of the switch Tra, and discharges the energy accumulated during an off period of the switch Tra. Therefore, the boost circuit 20a boosts the DC voltage outputted from the photovoltaic string 200a. The diode Da is provided between the switch Tra and the connection unit 30, and prevents the boosted DC voltage from flowing onto an input side from an output side of the boost circuit 20a. The diode Da is an example of the first backflow prevention element.

Both ends of the capacitor C1b are electrically connected to a positive electrode terminal and a negative electrode terminal of the photovoltaic string 200b, respectively, and the capacitor C1b smoothes the DC voltage outputted from the photovoltaic string 200b. The boost circuit 20b includes a coil L1b, a switch Trb, and a diode Db. The boost circuit 20b may be what is called a chopper switching regulator.

The switch Trb is an example of the second switch connected between the positive electrode terminal and the negative electrode terminal of the photovoltaic string 200b. For example, the switch Trb may be an Insulated Gate Bipolar Transistor (IGBT). One end of the coil L1b is connected to one end of the capacitor C1b, and the other end of the coil L1a is connected to a collector of the switch Trb. The collector of the switch Trb is connected to an anode of the diode Db, and an emitter of the switch Trb is connected to the other end of the capacitor C1b. The coil L1b accumulates energy based on the power from the photovoltaic string 200b during the on period of the switch Trb, and discharges the energy accumulated during the off period of the switch Trb. Therefore, the boost circuit 20b boosts the DC voltage outputted from the photovoltaic string 200b. The diode Db is provided between the switch Trb and the connection unit 30, and prevents the boosted DC voltage from flowing onto the input side from the output side of the boost circuit 20b. The diode Db is an example of the second backflow prevention element.

The boost circuits 20a and 20b are not limited to the above configuration. For example, the boost circuits 20a and 20b may be constructed as a insulation type boost circuits, such as a half-bridge boost circuit and a full-bridge boost circuit, which have a transformer winding including a primary winding and a secondary winding. The insulation type boost circuit includes a plurality of switches that are connected between output terminals of the power supply of the photovoltaic string 200a or the photovoltaic string 200b. The plurality of switches are connected in series with the primary winding. By turning on and off the plurality of switches, an exciting current is passed through the primary winding while an induced current is passed through the secondary winding. In the case where the boost circuit included in the photovoltaic system is the insulation type boost circuit, such as the full-bridge boost circuit, which has the transformer winding, the plurality of switches, which are connected in series with the primary winding and connected between the output terminals of the power supply, act as the first switch or the second switch.

The connection unit 30 connects the output side of the boost circuit 20a and the output side of the boost circuit 20b in parallel to each other. The capacitor C2 smooths the DC voltage outputted from the connection unit 30. The inverter 40 includes a switch, and converts the DC voltages outputted from the boost circuits 20a and 20b into the AC voltages by turning on and off the switch. For example, the inverter 40 may be constructed as a single-phase full-bridge PWM inverter including four bridge-connected semiconductor switches. In one pair out of the four semiconductor switches, the semiconductor switches are connected in series. In the other pair out of the four semiconductor switches, the semiconductor switches are connected in series. The other pair of semiconductor switches is connected in parallel to the one pair of semiconductor switches.

The coil L2 and the capacitor C3 are provided between the inverter 40 and the system power supply 300. The coil L2 and the capacitor C3 remove a noise from the AC voltage outputted from the inverter 40. The connected relay 50 is provided between the capacitor C3 and the system power supply 300. The power conditioner 10 and the system power supply 300 are electrically connected to each other by turning on the connected relay 50, and the power conditioner 10 and the system power supply 300 are electrically disconnected from each other by turning off the connected relay 50.

For example, the power supply 60 is constructed by a power supply IC chip. The power supply 60 is connected to both the ends of the connection unit 30. The power supply 60 generates power indicating a predetermined voltage value from the DC voltage taken out from the connection unit 30, and supplies the generated power to the control device 100.

In order to obtain the maximum power from the photovoltaic strings 200a and 200b, the control device 100 controls the switching operations of the boost circuits 20a and 20b and the inverter 40, boosts the DC voltages outputted from the photovoltaic strings 200a and 200b, converts the boosted DC voltages into the AC voltages, and outputs the AC voltages onto the side of the system power supply 300.

The power conditioner 10 also includes voltage sensors 12a and 12b, current sensors 14a and 14b, and a voltage sensor 16. The voltage sensor 12a detects a voltage value Vain corresponding to a potential difference at both the ends of the photovoltaic string 200a. The voltage sensor 12b detects a voltage value Vbin corresponding to a potential difference at both the ends of the photovoltaic string 200b. The current sensor 14a detects a current value lain corresponding to the current outputted from photovoltaic string 200a. The current sensor 14b detects a current value Ibin corresponding to the current outputted from photovoltaic string 200b. The voltage sensor 16 detects a voltage value Vout corresponding to a potential difference at both the ends of the connection unit 30.

In the photovoltaic system having the above configuration, short-circuit current values of the photovoltaic strings 200a and 200b are detected, and whether the photovoltaic strings 200a and 200b have an abnormality is determined based on the detected short-circuit current values.

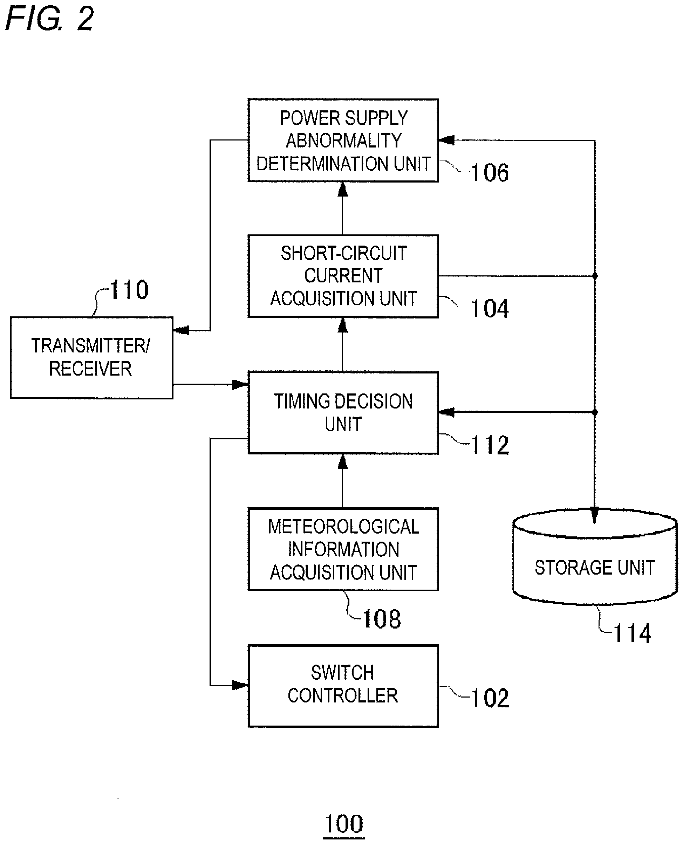

Fig. 2 is a view illustrating an example of a functional block of the control device 100. The control device 100 acts as the short-circuit current detection device. The control device 100 includes a switch controller 102, a short-circuit current value acquisition unit 104, a power supply abnormality determination unit 106, a meteorological information acquisition unit 108, a transmitter/receiver 110, a timing decision unit 112, and a storage unit 114. The switch controller 102, the short-circuit current value acquisition unit 104, the power supply abnormality determination unit 106, the meteorological information acquisition unit 108, the timing decision unit 112, and the storage unit 114 may be constructed by a microcomputer. The transmitter/receiver 110 may be constructed by a wireless antenna.

The switch controller 102 is an example of the controller. The switch controller 102 accumulates the energy based on the power outputted from the photovoltaic string 200a in the coil L1a during the on period of the switch Tra by turning on and off the switch Tra included in the boost circuit 20a, and boosts the voltage at the photovoltaic string 200a using the boost circuit 20a by discharging the energy from the coil L1a during the off period of the switch Tra. The switch controller 102 accumulates the energy based on the power outputted from the photovoltaic string 200b in the coil L1b during the on period of the switch Trb by turning on and off the switch Trb included in the boost circuit 20b, and boosts the voltage at the photovoltaic string 200b using the boost circuit 20b by discharging the energy from the coil L1b during the off period of the switch Trb.

When acquiring the first short-circuit current value that is of the short-circuit current value of the photovoltaic string 200a, the switch controller 102 stops the boost operation of the boost circuit 20a to turn on the switch Tra, thereby forming the first closed circuit of the photovoltaic string 200a. When acquiring the second short-circuit current value that is of the short-circuit current value of the photovoltaic string 200b, the switch controller 102 stops the boost operation of the boost circuit 20b to turn on the switch Trb, thereby forming the second closed circuit of the photovoltaic string 200b.

The short-circuit current value acquisition unit 104 acquires the first short-circuit current value passing through the first closed circuit when the switch Tra is in the on period while the boost operation of the boost circuit 20a is stopped. The short-circuit current value acquisition unit 104 acquires the second short-circuit current value passing through the second closed circuit when the switch Trb is in the on period while the boost operation of the boost circuit 20b is stopped.

At this point, the power supply 60 may acquire a driving power, which is of the power used to drive itself, from the connection unit 30. In the case where the voltage on the input side of the boost circuit 20a is less than that on the output side, the current flows partially onto the side of the inverter 40 from the photovoltaic string 200a through the diode Da. Therefore, the voltage at both the ends of the capacitor C2 fluctuates. That is, the voltage at both the ends of the connection unit 30 fluctuates. When the voltage at both the ends of the connection unit 30 fluctuates, the power supplied to the power supply 60 becomes unstable, and possibly the power is unstably supplied to the control device 100 from the power supply 60. For this reason, preferably the voltage on the output side of the boost circuit 20a is greater than that on the input side. This enables the current to be prevented from flowing partially onto the side of the inverter 40 from the photovoltaic string 200a through the diode Da. Therefore, the power is stably supplied to the power supply 60 because the voltage at both the ends of the connection unit 30 stabilizes, so that the power supply 60 can stably supply the power to the control device 100. The power supply 60 may directly take the power from the system power supply 300, and generate the power supplied to the control device 100 based on the power output from the system power supply 300.

In the case where the short-circuit current value acquisition unit 104 acquires the first short-circuit current value, in order to stably supply the power to the control device 100 from the power supply 60, the switch controller 102 may control the voltage at the connection unit 30 to set the voltage on the output side of the boost circuit 20a higher than the voltage on the input side of the boost circuit 20a. The switch controller 102 may control the voltage at the connection unit 30 such that the voltage at the connection unit 30 is greater than or equal to the voltage on the input side of the boost circuit 20a by turning on and off the switch Trb included in the boost circuit 20b. In the case where the short-circuit current value acquisition unit 104 acquires the first short-circuit current value, the switch controller 102 may turn on the switch Tra while setting the voltage on the output side of the boost circuit 20a higher than the voltage on the input side of the boost circuit 20a, and generate a short-circuit between the output terminals of the photovoltaic string 200a to form the first closed circuit of the photovoltaic string 200a. In the case where the short-circuit current value acquisition unit 104 acquires the second short-circuit current value, in order to stably supply the power to the control device 100 from the power supply 60, the switch controller 102 may control the voltage at the connection unit 30 to set the voltage on the output side of the boost circuit 20b higher than the voltage on the input side of the boost circuit 20b. The switch controller 102 may control the voltage at the connection unit 30 such that the voltage at the connection unit 30 is greater than or equal to the voltage on the input side of the boost circuit 20b by turning on and off the switch Tra included in the boost circuit 20a. In the case where the short-circuit current value acquisition unit 104 acquires the second short-circuit current value, the switch controller 102 may turn on the switch Trb while setting the voltage on the output side of the boost circuit 20b higher than the voltage on the input side of the boost circuit 20b, and generate the short-circuit between the output terminals of the photovoltaic string 200b to form the second closed circuit of the photovoltaic string 200b.

At this point, depending on a meteorological condition, sometimes a small amount of power is obtained from the photovoltaic string 200a or the photovoltaic string 200b, and the voltage at the connection unit 30 hardly increases greater than or equal to the voltage on the input side of the boost circuit 20b or the voltage on the input side of the boost circuit 20a by the boost operation of the boost circuit 20a or 20b. In this case, the switch controller 102 may control each switch included in the inverter 40, and increase the voltage at the connection unit 30 such that the voltage at the connection unit 30 is greater than or equal to the voltage on the input side of the boost circuit 20b or the voltage on the input side of the boost circuit 20a based on the power from the system power supply 300.

In the case where the voltage at the connection unit 30 hardly increases greater than or equal to the voltage on the input side of the boost circuit 20a by controlling the switch Trb included in the boost circuit 20b, the switch controller 102 may output the power onto the side of the connection unit 30 from the system power supply 300 by turning on and off each switch included in the inverter 40, and increase the voltage at the connection unit 30 such that the voltage at the connection unit 30 is greater than or equal to the voltage on the input side of the boost circuit 20a. In the case where the voltage at the connection unit 30 hardly increases greater than or equal to the voltage on the input side of the boost circuit 20a by controlling the switch Tra included in the boost circuit 20a, the switch controller 102 may output the power onto the side of the connection unit 30 from the system power supply 300 by turning on and off each switch included in the inverter 40, and increase the voltage at the connection unit 30 such that the voltage at the connection unit 30 is greater than or equal to the voltage on the input side of the boost circuit 20b. The switch controller 102 can output the power to the inverter 40 on the side of the connection unit 30 from the system power supply 300 by performing PWM control to each switch included in the inverter 40 such that the current outputted from the inverter 40 is opposite in phase to the voltage at the system power supply 300.

The power supply abnormality determination unit 106 determines whether the photovoltaic string 200a has an abnormality based on comparison between the first short-circuit current value and the first reference current value that is previously fixed based on a characteristic of the photovoltaic string 200a. The power supply abnormality determination unit 106 determines whether the photovoltaic string 200b has an abnormality based on comparison between the second short-circuit current value and the second reference current value that is previously fixed based on a characteristic of the photovoltaic string 200b. Possibly outputs of the photovoltaic string 200a and the photovoltaic string 200b decrease due to degradation and the like. The detected short-circuit current also decreases in the case where the outputs decrease. Therefore, the power supply abnormality determination unit 106 may determine that the photovoltaic string 200a or 200b has the abnormality in the case where the first or second short-circuit current value is less than or equal to the first or second reference current value by a predetermined value.

The power supply abnormality determination unit 106 may decide that the first or second short-circuit current value, which is initially acquired on the predetermined meteorological condition by the short-circuit current value acquisition unit 104, is the first or second reference current value. The power supply abnormality determination unit 106 may decide that the first or second short-circuit current value, which is initially acquired by the short-circuit current value acquisition unit 104 when the outputs of the photovoltaic strings 200a and 200b are predetermined values, is the first or second reference current value. The power supply abnormality determination unit 106 may decide that the first or second short-circuit current value when the output power of the power conditioner 10 is a predetermined value, which is initially acquired by the short-circuit current value acquisition unit 104, is the first or second reference current value. The power supply abnormality determination unit 106 may decide that the first or second short-circuit current value when an internal temperature of the power conditioner 10 is a predetermined value, which is initially acquired by the short-circuit current value acquisition unit 104, is the first or second reference current value.

The power supply abnormality determination unit 106 compares the decided first or second reference current value to the first or second short-circuit current value presently acquired by the short-circuit current value acquisition unit 104. The power supply abnormality determination unit 106 may determine that the photovoltaic string 200a or 200b has the abnormality when the difference between the first or second reference current value and the first or second short-circuit current value is greater than a predetermined reference difference.

The meteorological information acquisition unit 108 acquires meteorological information around a site where the photovoltaic strings 200a and 200b are placed. The meteorological information is a parameter that has an influence on the outputs of the photovoltaic strings 200a and 200b. The meteorological information includes temperature, illuminance and the like. The transmitter/receiver 110 conducts communication with the outside in a wireless or wired manner. The transmitter/receiver 110 may receive a message to provide a command to determine the abnormalities of the photovoltaic strings 200a and 200b from an external management device. The transmitter/receiver 110 may transmit a determination result of the power supply abnormality determination unit 106 to the external management device. The transmitter/receiver 110 may transmit the first and second short-circuit current values acquired by the short-circuit current value acquisition unit 104 to the external management device and the like.

The timing decision unit 112 decides determination timing indicating the time the power supply abnormality determination unit 106 determines whether the photovoltaic strings 200a and 200b have the abnormalities. For example, the timing decision unit 112 may decide the determination timing based on the meteorological information acquired by the meteorological information acquisition unit 108. The timing decision unit 112 may decide that a present time is the determination timing in the case where the present meteorological condition agrees with the meteorological condition at the time the first and second reference current values are decided.

The timing decision unit 112 may decide that the present time is the determination timing in the case where each of the current outputs of the photovoltaic strings 200a and 200b is included in a reference range, which is fixed based on the output when the first and second reference current values are acquired. The timing decision unit 112 may decide that the present time is the determination timing in the case where the current output power of the power conditioner 10 is included in a reference range, which is fixed based on the output power when the first and second reference current values are acquired. The timing decision unit 112 may decide that the present time is the determination timing in the case where the current internal temperature of the power conditioner 10 is included in a reference range, which is fixed based on the internal temperature when the first and second reference current values are acquired.

The timing decision unit 112 may decide that the present time is the determination timing in the case where a present date becomes a predetermined date. Alternatively, the timing decision unit 112 may decide the determination timing every time the number of start-up times of the power conditioner 10 becomes predetermined times. The timing decision unit 112 may decide the determination timing at the time at least one of parameters including the meteorological condition, the outputs of the photovoltaic strings 200a and 200b, the output power of the power conditioner 10, and the internal temperature of the power conditioner 10 is included in the initially-fixed reference range after the present date becomes the predetermined date or after the number of start-up times of the power conditioner 10 reaches the predetermined times.

The timing decision unit 112 may decide that the present time is the determination timing in the case where the transmitter/receiver 110 receives the message to provide the command to determine the abnormality from the external management device.

The timing decision unit 112 may decide the determination timing at the time at least one of parameters including the meteorological condition, the outputs of the photovoltaic strings 200a and 200b, the output power of the power conditioner 10, and the internal temperature of the power conditioner 10 is included in the initially-fixed reference range after the transmitter/receiver 110 receives the message to provide the command to determine the abnormality from the external management device.

The first and second reference current values, the meteorological condition for deciding the abnormality determination timing, the outputs of the photovoltaic strings 200a and 200b, and the output power and the internal temperature of the power conditioner 10 are stored in the storage unit 114.

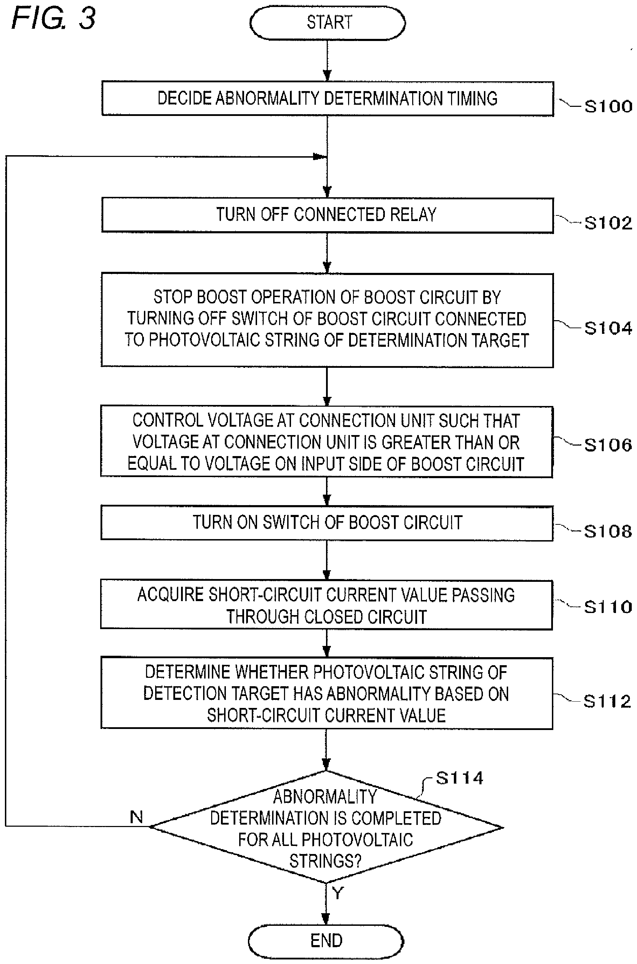

Fig. 3 is a flowchart illustrating an example of a procedure in which the control device 100 determines whether the photovoltaic strings 200a and 200b have the abnormalities.

The timing decision unit 112 decides that the present time is the determination timing in which the abnormal determinations of the photovoltaic strings 200a and 200b are made in the case where any one of the above conditions is satisfied (S100). In order to reduce useless power consumption, the control device 100 turns off the connected relay 50 to electrically disconnect the power conditioner 10 and the system power supply 300 from each other (S102).

Subsequently, the switch controller 102 stops the boost operation of the target boost circuit by turning off the switch of the target boost circuit connected to the photovoltaic string of the determination target (S104). For example, the switch controller 102 turns off the switch Tra of the boost circuit 20a connected to the photovoltaic string 200a of the determination target to stop the boost operation of the target boost circuit 20a.

The switch controller 102 acquires the voltage value on the input side and the voltage value on the output side of the target boost circuit through the voltage sensor 12a and the voltage sensor 16. The switch controller 102 controls the voltage on the output side of the target boost circuit such that the voltage on the output side is greater than or equal to the voltage on the input side of the target boost circuit, namely, the switch controller 102 controls the voltage at the connection unit 30 (S106).

The switch controller 102 turns on the switch of the target boost circuit to form the closed circuit including the photovoltaic string of the determination target. The short-circuit current value acquisition unit 104 acquires the current value, which passes through the closed circuit formed by turning on the switch of the target boost circuit, as the short-circuit current value during the on period of the switch of the target boost circuit (S108). For example, the short-circuit current value acquisition unit 104 acquires the current value, which passes through the first closed circuit during the on period of the switch Tra of the boost circuit 20a, as the first short-circuit current value through the current sensor 14a.

The power supply abnormality determination unit 106 determines whether the photovoltaic string of the determination target has the abnormality by comparing the acquired short-circuit current value to the reference current value corresponding to the photovoltaic string of the determination target (S112). The control device 100 determines whether the determination of the abnormality is made for all the photovoltaic strings (S114). Until the determination of the abnormality is not made for all the photovoltaic strings, the control device 100 repeats the steps of processing from Step S102 to Step S112. For example, after the determination of the abnormality is made for all the photovoltaic strings 200a, the control device 100 determines whether the photovoltaic string 200b has the abnormality.

The power supply abnormality determination unit 106 may determine whether the photovoltaic string of the determination target has the abnormality based on the reference current value and the plurality of short-circuit current values, which are stored in the storage unit 114 every time the short-circuit current value acquisition unit 104 acquires the short-circuit current value. The power supply abnormality determination unit 106 may calculate an average value of the plurality of short-circuit current values, and determine whether the photovoltaic string of the determination target has the abnormality based on the comparison between the average and the reference current value. The power supply abnormality determination unit 106 may determine that the photovoltaic string of the determination target has the abnormality when the difference between the acquired short-circuit current value and the reference current value is greater than or equal to the fixed reference difference, and when the condition related to the meteorological information on the illuminance in acquiring the short-circuit current value agrees with the condition related to the meteorological information on the illuminance corresponding to the reference current value. For example, the power supply abnormality determination unit 106 may determine that the photovoltaic string of the determination target has the abnormality when the difference between the acquired short-circuit current value and the reference current value is greater than or equal to the fixed reference difference, and when the illuminance in acquiring the short-circuit current value falls within a reference illuminance range fixed based on the illuminance in deciding the reference current value.

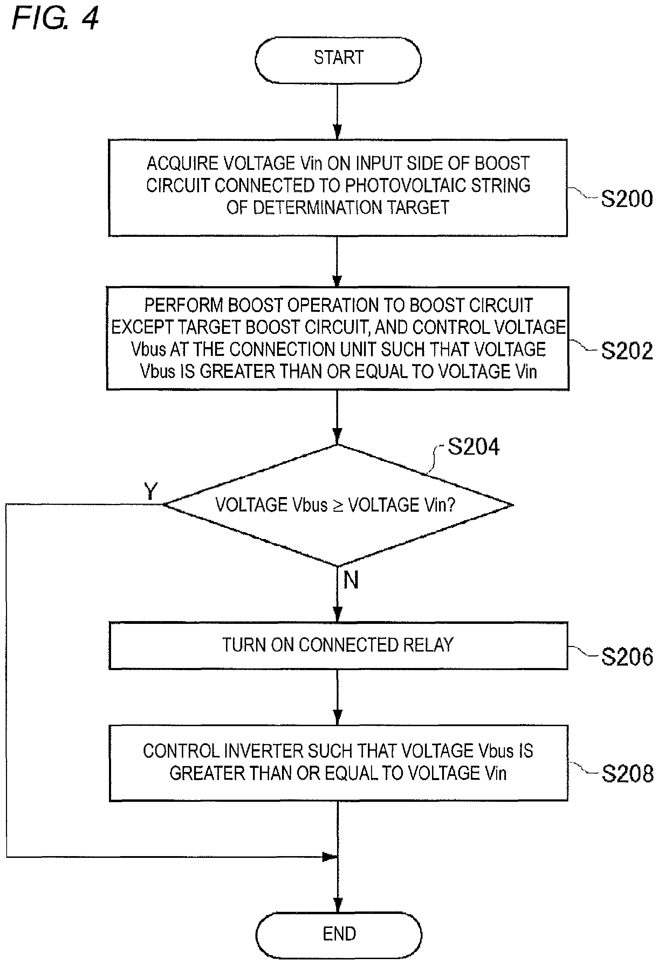

Fig. 4 is a flowchart illustrating an example in which the switch controller 102 controls the voltage at the connection unit 30 such that the voltage at the connection unit 30 is greater than or equal to the voltage on the input side of the target boost circuit connected to the photovoltaic string of the determination target.

The switch controller 102 acquires the voltage Vin on the input side of the boost circuit connected to the photovoltaic string of the determination target (S200). The switch controller 102 performs the boost operation to the boost circuit except the target boost circuit, and controls a voltage Vbus at the connection unit 30 such that the voltage Vbus is greater than or equal to the voltage Vin (S202). The switch controller 102 determines whether the voltage Vbus is greater than or equal to the voltage Vin by the boost operation of the boost circuit except the target boost circuit (S204).

For example, sometimes the photovoltaic string connected to the boost circuit except the target boost circuit has the low output because the illuminance is low for the photovoltaic string, and the voltage Vbus at the connection unit 30 is hardly controlled by the boost operation of the boost circuit such that the voltage Vbus is greater than or equal to the voltage Vin. In such cases, the switch controller 102 turns on the connected relay 50 to electrically connect the power conditioner 10 and the system power supply 300 to each other (S206). The switch controller 102 controls the inverter 40, and controls the voltage Vbus using the power supplied from the system power supply 300 such that the voltage Vbus is greater than or equal to the voltage Vin (S208). For example, the switch controller 102 performs the PWM control to each switch included in the inverter 40 such that the current output from the inverter 40 is opposite in phase to the AC voltage at the system power supply 300. Through the above processing, the switch controller 102 can perform the control such that the voltage Vbus is greater than or equal to the voltage Vin.

In the embodiment, the power conditioner 10 includes the two boost circuits by way of example. Alternatively, the power conditioner 10 may include at least three boost circuits. In the case where the power conditioner 10 includes three boost circuits, the switch controller 102 performs the boost operation of one of the three boost circuits while turning on the switch included in the target boost circuit connected to the photovoltaic string of the determination target among the three boost circuits, and the switch controller 102 may control the voltage Vbus at the connection unit 30 such that the voltage Vbus is greater than or equal to the voltage Vin.

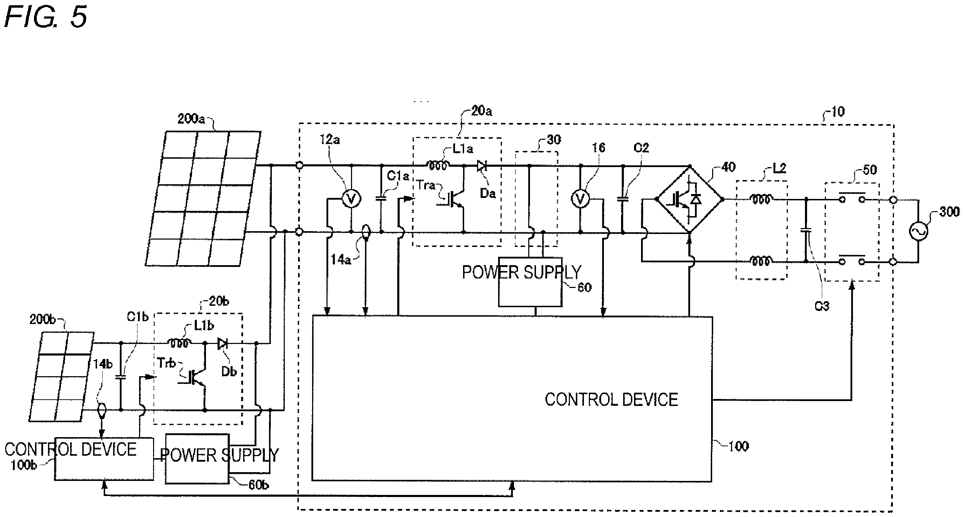

Fig. 5 is a system configuration diagram illustrating an example of an entire configuration of a photovoltaic system according to a modification of the embodiment. The photovoltaic system of the modification differs from the photovoltaic system in Fig. 1 in that the boost circuit 20b is provided outside the power conditioner 10. The photovoltaic system of the modification also differs from the photovoltaic system in Fig. 1 in that the photovoltaic system of the modification includes a control device 100b that acquires the short-circuit current value of the photovoltaic string 200b and a power supply 60b that supplies the driving power to the control device 100b.

The output side of the boost circuit 20b that boosts the DC voltage outputted from the photovoltaic string 200b is connected to the input side of the boost circuit 20a provided in the power conditioner 10. The power supply 60b is connected to both the ends on the output side of the boost circuit 20b. The power supply 60b generates the power indicating the predetermined voltage value from the DC voltage taken out from the output side of the boost circuit 20b, and supplies the generated power to the control device 100b.

The control device 100b conducts communication with the control device 100 in the wireless or wired manner. Similarly to the control device 100, the control device 100b may include the microcomputer and the wireless antenna. After stopping the boost operation of the boost circuit 20b, the control device 100b turns on the switch Trb to form the second closed circuit of the photovoltaic string 200b in response to a request from the control device 100. During the on period of the switch Trb, the control device 100b acquires the second short-circuit current value of the photovoltaic string 200 through the current sensor 14b, and transmits the acquired second short-circuit current value to the control device 100. Based on the comparison between the acquired second short-circuit current value and the previously-stored second reference current value, the control device 100b may determine whether the photovoltaic string 200b has the abnormality, and transmit the determination result to the control device 100.

At this point, the output of the photovoltaic string 200b may be less than that of the photovoltaic string 200a. The photovoltaic modules constituting the photovoltaic strings 200a and 200b may differ from each other in specifications. On the other hand, when the photovoltaic modules constituting the photovoltaic strings 200a and 200b are identical to each other in specifications, the number of photovoltaic modules constituting the photovoltaic string 200b may be less than the number of photovoltaic modules constituting the photovoltaic string 200a.

In the case where the photovoltaic strings 200a and 200b are constructed as described above, the voltage outputted from the photovoltaic string 200a is greater than that output from the photovoltaic string 200b. Therefore, the voltage on the output side of the boost circuit 20b is greater than that on the input side of the boost circuit 20b while the boost operation of the boost circuit 20b is stopped. In this case, the voltage on the output side of the boost circuit 20b does not fluctuate, when the switch Trb is turned on in order to acquire the second short-circuit current value of the photovoltaic string 200b while the boost operation of the boost circuit 20b is stopped.

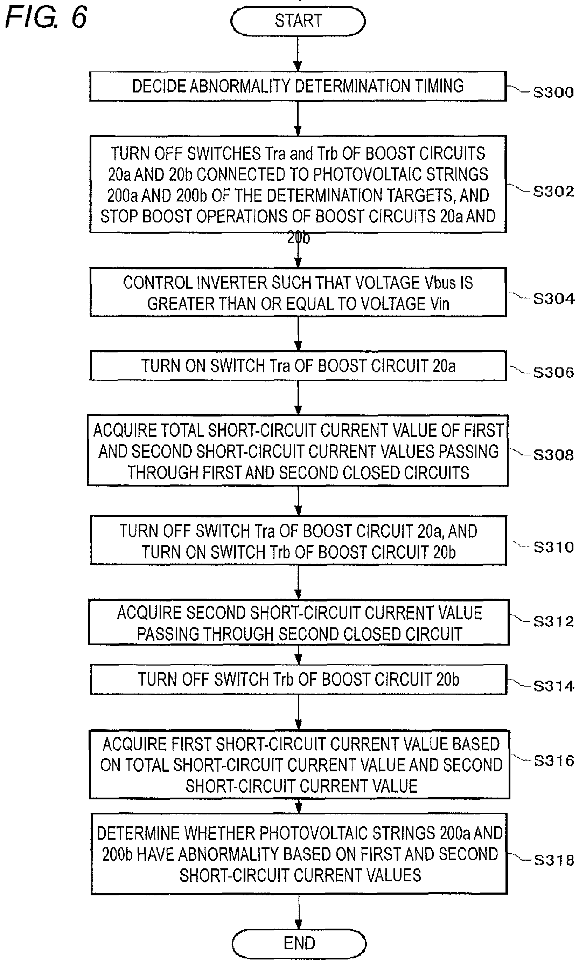

Fig. 6 is a flowchart illustrating an example of a procedure in which the control device 100 of the modification of the embodiment determines whether the photovoltaic string has the abnormality.

The timing decision unit 112 decides the timing of abnormality determination based on the reception of the message indicating the abnormality determination request from the external management device, the meteorological condition, the outputs of the photovoltaic strings 200a and 200b, or the output power or the internal temperature of the power conditioner 10 (S300). The switch controller 102 turns off the switches of the boost circuits 20a and 20b connected to the photovoltaic strings 200a and 200b of the determination targets, and stops the boost operations of the boost circuits 20a and 20b (S302). For example, the switch controller 102 transmits the message stopping the boost operation of the boost circuit 20b to the control device 100b through the transmitter/receiver 110, and the control device 100b may stop the boost operation of the boost circuit 20b.

The switch controller 102 controls the inverter 40 such that the current output from the inverter 40 is opposite in phase to the output voltage at the system power supply 300, and the switch controller 102 controls the voltage Vbus at the connection unit 30 using the power output from the system power supply 300 such that the voltage Vbus at the connection unit 30 is greater than or equal to the voltage Vin on the input side of the boost circuit 20a (S304).

The switch controller 102 turns on the switch Tra of the boost circuit 20a (S306). During the on period of the boost circuit 20a, the short-circuit current value acquisition unit 104 acquires a total current value of the first short-circuit current value passing through the first closed circuit including the photovoltaic string 200a and the second short-circuit current value passing through the second closed circuit including the photovoltaic string 200b through the current sensor 14a (S308).

The switch controller 102 turns off the switch Tra of the boost circuit 20a, and turns on the switch Trb of the boost circuit 20b (S310). Here, when the switch Tra of the boost circuit 20a is turned off, the power supply 60b can supply the driving power to the control device 100b using the power outputted from the photovoltaic string 200a. When the control device 100b is driven, the switch controller of the control device 100b turns on the switch Trb of the boost circuit 20b in response to the message from the control device 100. The control device 100b acquires the second short-circuit current value of the photovoltaic string 200b through the current sensor 14b, and transmits the second short-circuit current value to the control device 100 (S312). The control device 100b turns off the switch Trb of the boost circuit 20b after transmitting the second short-circuit current value (S314).

The power supply abnormality determination unit 106 acquires the first short-circuit current value based on the total current value and the second short-circuit current value (S316). The power supply abnormality determination unit 106 may acquire the first short-circuit current value by subtracting the second short-circuit current value from the total current value. The power supply abnormality determination unit 106 compares the acquired first short-circuit current value and second short-circuit current value to the reference current values corresponding to the first and second short-circuit current values, and determines whether each of the photovoltaic strings 200a and 200b has the abnormality (S318).

As described above, according to the photovoltaic system of the modification, even if the boost circuits are provided inside and outside the power conditioner 10, whether each photovoltaic string has the abnormality can be determined by acquiring the short-circuit current value of the photovoltaic string connected to each boost circuit.

According to each photovoltaic system, the closed circuit of the photovoltaic string can be formed using the existing boost circuit provided in the photovoltaic system. Therefore, in order to acquire the short-circuit current value of the photovoltaic string, it is not necessary to provide a new circuit such as a transistor. Based on the short-circuit current value of the photovoltaic string, a checker can perform remote control of the boost circuit to inspect whether the photovoltaic string has the abnormality without visiting the installation site of the photovoltaic string.

A floating capacitance exists between the photovoltaic string and a ground. For this reason, when the photovoltaic string is short-circuited, possibly the relatively large current caused by the floating capacitance passes through the closed circuit formed by the short circuit. In the case where the transistor is simply provided in order to short-circuit the photovoltaic string, it is necessary to provide a large-size transistor such that the transistor does not break down due to the current caused by the floating capacitance. On the other hand, according to the photovoltaic system of the embodiment, the transistor provided in the boost circuit is used as the transistor that short-circuits the photovoltaic string. A coil or a transformer winding is provided in the boost circuit in order to boost the input voltage. The current caused by the floating capacitance can be absorbed by the coil or the transformer winding. Therefore, it is not necessary to add the large-size transistor, which acquires the short-circuit current value, such that the transistor does not break down due to the current caused by the floating capacitance.

Additionally, the voltage control operation to control the voltage at the connection unit 30 can be performed by the boost operation of the boost circuit, in which the power from the photovoltaic string except the photovoltaic string of the determination target is used, such that the voltage at the connection unit 30 is greater than or equal to the voltage on the input side of the target boost circuit connected to the photovoltaic string of the determination target. Therefore, the consumption of the power from the system power supply 300 in association with the voltage control operation can be reduced as little as possible.

A program, which is stored in a computer-readable recording medium to perform various pieces of processing related to the acquisition of the short-circuit current value and the abnormality determination of the photovoltaic string, is installed in a computer, and each unit included in the control device 100 may be constructed by causing the computer to execute the program. That is, the computer is caused to execute the program to perform various pieces of processing related to the acquisition of the short-circuit current value and the abnormality determination of the photovoltaic string, and the computer acts as each unit included in the control device 100, whereby the control device 100 may be constructed.

The computer includes a CPU, memories such as a ROM, a RAM, and an EEPROM (registered trademark), a communication bus, and an interface, and the CPU reads and executes sequentially the processing program previously stored in the ROM as firmware, whereby the computer acts as the control device 100.

Although the embodiment of the present invention is described above, the technical scope of the present invention is not limited to the scope of the embodiment. It is clear for those skilled in the art that various changes and modifications can be made in the present invention. It is clear from the claims that the changes and modifications are also included in the technical scope of the present invention.

In the performance sequence of pieces of processing such as the operations, the procedures, the steps, and the stages in the device, the system, the program, and the method in the claims, the description, and the drawings, "before" or "prior to" is not described unless otherwise noted, and it is noted that the pieces of processing are performed in any performance sequence as long as the output of the preceding processing is not used in the subsequent processing. In the operation flow of the claims, the description, and the drawings, for the sake of convenience, it is not always necessary that the pieces of processing be performed in this order even if "at first" or "then" is used.

## Claims

1. A power conditioner (10) that is adapted to boost a direct current outputted from a first power supply (200a), wherein the power conditioner converts the boosted direct current into an alternating current, and outputs the converted alternating current to a system power supply (300), the power conditioner (10) comprising:
a) a first boost circuit (20a) that comprises a first switch (Tra) configured to be connected between output terminals of the first power supply (200a), and configured to boost the direct current from the first power supply (200a) by turning on and off the first switch;
b) an inverter (40) configured to convert the direct current outputted from the first boost circuit (20a) into the alternating current;
c) a connection unit (30) configured to connect an output side of the first boost circuit (20a) and an input side of the inverter (40);
d) a controller (102) configured to control voltage at the connection unit (30) by turning on the first switch to set the output side of the first boost circuit (20a) to a voltage higher than a voltage on the input side of the first boost circuit (20a), and thereby generating a short-circuit between the output terminals of the first power supply (200a) to form a first closed circuit of the first power supply (200a);
e) a short-circuit current value acquisition unit (104) configured to acquire a first short-circuit current value passing through the first closed circuit during a period, when the controller (102) turns on the first switch to set the output side of the first boost circuit (20a) to the voltage higher than the voltage on the input side of the first boost circuit (20a); and
f) a power supply abnormality determination unit (106) configured to determine whether the first power supply (200a) has an abnormality based on comparison between the first short-circuit current value and a first reference current value, the first reference current value being previously fixed based on a characteristic of the first power supply (200a).

2. The power conditioner (10) according to claim 1, wherein
the first boost circuit (20a) further comprises a first backflow prevention circuit configured to prevent inflow of a current from the output side of the first boost circuit (20a).

3. The power conditioner (10) according to claim 1 or 2, further comprising:
a second boost circuit (20b) that comprises a second switch (Trb) configured to be connected between output terminals of a second power supply (200b), and is configured to boost the direct current from the second power supply (200b) by turning on and off the second switch, wherein
the connection unit (30) connects the output side of the first boost circuit (20a) and an output side of the second boost circuit (20b) in parallel to each other; and
the controller (102) is configured to turn on and off the second switch to control the voltage at the connection unit (30), and to set the output side of the first boost circuit (20a) to the voltage higher than the voltage on the input side of the first boost circuit (20a).

4. The power conditioner (10) according to claim 3, wherein
the controller (102) is configured to control the inverter (40) to control the voltage at the connection unit (30), and sets the output side of the first boost circuit (20a) to the voltage higher than the voltage on the input side of the first boost circuit (20a), when the controller (102) turns on and off the second switch to control the voltage at the connection unit (30) and cannot set the output side of the first boost circuit (20a) to the voltage higher than the voltage on the input side of the first boost circuit (20a).

5. The power conditioner (10) according to any one of claims 3 to 4, wherein
the controller (102) is configured to turn on and off the first switch to control the voltage at the connection unit (30), turn on the second switch to set the output side of the second boost circuit (20b) to the voltage higher than the voltage on the input side of the second boost circuit (20b), and thereby generate the short-circuit between the output terminals of the second power supply (200b) to form a second closed circuit of the second power supply (200b),
the short-circuit current value acquisition unit (104) acquires a second short-circuit current value passing through the second closed circuit during a period, when the controller (102) turns on and off the first switch to control the voltage at the connection unit (30) and turns on the second switch to set the output side of the second boost circuit (20b) to the voltage higher than the voltage on the input side of the second boost circuit (20b), and
the power supply abnormality determination unit (106) is configured to determine whether the second power supply has the abnormality based on comparison between the second short-circuit current value and a second reference current value, the second reference current value being previously fixed based on a characteristic of the second power supply (200b).

6. The power conditioner (10) according to any one of claims 3 to 5, wherein
the second boost circuit (20b) further comprises a second backflow prevention circuit configured to prevent inflow of the current from the output side of the second boost circuit (20b).

7. The power conditioner (10) according to claim 5 or 6, wherein
the short-circuit current value acquisition unit (104) is configured to acquire a total current value of the first short-circuit current value passing through the first closed circuit and the second short-circuit current value passing through the second closed circuit, and
the power supply abnormality determination unit (106) acquires the first short-circuit current value based on the total current value and the second short-circuit current value, through a current sensor (14a).

8. The power conditioner (10) according to claim 7, wherein the power supply abnormality determination unit (106) is configured to acquire the first short-circuit current value by subtracting the second short-circuit current value from the total current value.

9. The power conditioner (10) according to claim 1 or 2, wherein
the controller (102) is configured to control the inverter (40) to output a power from the system power supply (300) onto the side of the connection unit (30), and controls the voltage at the connection unit (30) to set the output side of the first boost circuit (20a) to the voltage higher than the voltage on the input side of the first boost circuit (20a).

10. A photovoltaic system comprising:
a) a first photovoltaic cell of the first power supply (200a); and
b) the power conditioner (10) according to any one of claims 1 to 9 configured to convert the direct current outputted from the first photovoltaic cell into the alternating current and to output the alternating current onto the side of the system power supply (300).

11. A photovoltaic system comprising:
a) a first photovoltaic cell of the first power supply (200a);
b) a second photovoltaic cell of the second power supply (200b) connected in parallel to the first photovoltaic cell; and
c) the power conditioner (10) according to any one of claims 3 to 8 configured to convert the direct currents outputted from the first and second photovoltaic cells into the alternating currents and to output the alternating currents onto the side of the system power supply (300).

12. An abnormality determination method for determining an abnormality of a first power supply (200a) connected to a power conditioner (10), the power conditioner comprising a first boost circuit (20a) that comprises the first switch (Tra) connected between output terminals of the first power supply (200a), and is configured to boost the direct current from the first power supply (200a) by turning on and off the first switch, an inverter (40) configured to convert the direct current outputted from the first boost circuit (20a) into the alternating current, and a connection unit (30) configured to connect an output side of the first boost circuit (20a) and an input side of the inverter (40); the power conditioner (10) boosting the direct current outputted from the first power supply (200a), converting the boosted direct current into an alternating current, and outputting the converted alternating current onto a side of a system power supply (300), the abnormality determination method comprising:
a) a step of controlling the voltage at eh connection unit (30) by turning on the first switch to set the output side of the first boost circuit (20a) to a voltage higher than a voltage on the input side of the first boost circuit (20a), and thereby generating a short-circuit between the output terminals of the first power supply (200a) to form a first closed circuit of the first power supply (200a);
b) a step of acquiring a first short-circuit current value passing through the first closed circuit in a period, during which the first switch is turned on to set the output side of the first boost circuit (20a) to the voltage higher than the voltage on the input side of the first boost circuit (20a); and
a step of determining whether the first power supply (200a) has an abnormality based on comparison between the first short-circuit current value and a first reference current value, the first reference current value being previously fixed based on a characteristic of the first power supply (200a).

13. The abnormality determination method according to claim 12, wherein
the power conditioner (10) further comprises a second boost circuit (20b) that comprises a second switch (Trb) connected between output terminals of a second power supply (200b) and is configured to boost the direct current from the second power supply (200b) by turning on and off the second switch,
the connection unit (30) connects the output side of the first boost circuit (20a) and the output side of the second boost circuit (20b) in parallel to each other; and
in the first closed circuit forming step, the second switch is turned on and off to control the voltage at the connection unit (30), and the output side of the first boost circuit (20a) is set to the voltage higher than the voltage on the input side of the first boost circuit (20a).

14. The abnormality determination method according to claim 13, wherein
in the first closed circuit forming step, the inverter (40) is controlled to control the voltage at the connection unit (30), and the output side of the first boost circuit (20a) is set to the voltage higher than the voltage on the input side of the first boost circuit (20a), when the second switch cannot be turned on and off to control the voltage at the connection unit (30) and when the output side of the first boost circuit (20a) cannot be set to the voltage higher than the voltage on the input side of the first boost circuit (20a).

15. The abnormality determination method according to claim 13 or 14, further comprising
a step of turning on and off the first switch (Tra) to control the voltage at the connection unit (30) to turn on the second switch to set the output side of the second boost circuit (20b) to the voltage higher than the voltage on the input side of the second boost circuit (200b), and thereby generating the short-circuit between the output terminals of the second power supply (200b) to form a second closed circuit of the second power supply (200b);
a step of acquiring a second short-circuit current value passing through the second closed circuit in a period, during which the first switch is turned on and off to control the voltage at the connection unit (30) and the second switch (Trb) is turned on to set the output side of the second boost circuit (20b) to the voltage higher than the voltage on the input side of the second boost circuit (20b), and
a step of determining whether the second power supply (200b) has the abnormality based on comparison between the second short-circuit current value and a second reference current value, the second reference current value being previously fixed based on a characteristic of the second power supply (200b).

## Patentansprüche

1. Leistungsaufbereiter (10), der dafür ausgelegt ist, einen von einer ersten Stromversorgung (200a) ausgegebenen Gleichstrom zu verstärken, wobei der Leistungsaufbereiter den verstärkten Gleichstrom in einen Wechselstrom umwandelt und den umgewandelten Wechselstrom an eine Systemstromversorgung (300) ausgibt, wobei der Leistungsaufbereiter (10) umfasst:
a) einen ersten Verstärkungskreis (20a), der einen ersten Schalter (Tra) umfasst, der dafür eingerichtet ist, zwischen Ausgangsanschlüssen der ersten Stromversorgung (200a) verbunden zu werden, und dafür eingerichtet ist, den Gleichstrom von der ersten Stromversorgung (200a) durch Ein- und Ausschalten des ersten Schalters zu verstärken;
b) einen Inverter (40), der dafür eingerichtet ist, den von dem ersten Verstärkungskreis (20a) ausgegebenen Gleichstrom in den Wechselstrom umzuwandeln;
c) eine Verbindungseinheit (30), die dafür eingerichtet ist, eine Ausgangsseite des ersten Verstärkungskreises (20a) und eine Eingangsseite des Inverters (40) zu verbinden;
d) einen Controller (102), der dafür eingerichtet ist, eine Spannung an der Verbindungseinheit (30) zu steuern, indem er den ersten Schalter einschaltet, um die Ausgangsseite des ersten Verstärkungskreises (20a) auf eine Spannung einzustellen, die höher als eine Spannung auf der Eingangsseite des ersten Verstärkungskreises (20a) ist, und dadurch einen Kurzschluss zwischen den Ausgangsanschlüssen der ersten Stromversorgung (200a) zu erzeugen, um einen ersten geschlossenen Stromkreis der ersten Stromversorgung (200a) zu bilden;
e) eine Kurzschlussstromwert-Erfassungseinheit (104), die dafür eingerichtet ist, einen ersten Kurzschlussstromwert zu erfassen, der während eines Zeitraums durch den ersten geschlossenen Stromkreis fließt, wenn der Controller (102) den ersten Schalter einschaltet, um die Ausgangsseite des ersten Verstärkungskreises (20a) auf die Spannung einzustellen, die höher ist als die Spannung auf der Eingangsseite des ersten Verstärkungskreises (20a); und
f) eine Stromversorgungsanomalie-Bestimmungseinheit (106), die dafür eingerichtet ist, auf der Grundlage eines Vergleichs zwischen dem ersten Kurzschlussstromwert und einem ersten Referenzstromwert zu bestimmen, ob die erste Stromversorgung (200a) eine Anomalie aufweist, wobei der erste Referenzstromwert zuvor auf der Grundlage einer Kennlinie der ersten Stromversorgung (200a) festgelegt wurde.

2. Leistungsaufbereiter (10) nach Anspruch 1, wobei der erste Verstärkungskreis (20a) des Weiteren einen ersten Rückflussverhinderungskreis umfasst, der dafür eingerichtet ist, den Zufluss eines Stroms von der Ausgangsseite des ersten Verstärkungskreises (20a) zu verhindern.

3. Leistungsaufbereiter (10) nach Anspruch 1 oder 2, des Weiteren umfassend:
einen zweiten Verstärkungskreis (20b), der einen zweiten Schalter (Trb) umfasst, der dafür eingerichtet ist, zwischen Ausgangsanschlüssen einer zweiten Stromversorgung (200b) verbunden zu werden, und dafür eingerichtet ist, den Gleichstrom von der zweiten Stromversorgung (200b) durch Ein- und Ausschalten des zweiten Schalters zu verstärken,
wobei
die Verbindungseinheit (30) die Ausgangsseite des ersten Verstärkungskreises (20a) und eine Ausgangsseite des zweiten Verstärkungskreises (20b) zueinander parallel schaltet; und der Controller (102) dafür eingerichtet ist, den zweiten Schalter ein- und auszuschalten, um die Spannung an der Verbindungseinheit (30) zu steuern, und die Ausgangsseite des ersten Verstärkungskreises (20a) auf die Spannung einzustellen, die höher als die Spannung auf der Eingangsseite des ersten Verstärkungskreises (20a) ist.

4. Leistungsaufbereiter (10) nach Anspruch 3, wobei der Controller (102) dafür eingerichtet ist, den Inverter (40) zu veranlassen, die Spannung an der Verbindungseinheit (30) zu steuern, und die Ausgangsseite des ersten Verstärkungskreises (20a) auf die Spannung einstellt, die höher ist als die Spannung auf der Eingangsseite des ersten Verstärkungskreises (20a), wenn der Controller (102) den zweiten Schalter ein- und ausschaltet, um die Spannung an der Verbindungseinheit (30) zu steuern, und die Ausgangsseite des ersten Verstärkungskreises (20a) nicht auf die Spannung einstellen kann, die höher ist als die Spannung auf der Eingangsseite des ersten Verstärkungskreises (20a).

5. Leistungsaufbereiter (10) nach einem der Ansprüche 3 und 4, wobei
der Controller (102) dafür eingerichtet ist, den ersten Schalter ein- und auszuschalten, um die Spannung an der Verbindungseinheit (30) zu steuern, den zweiten Schalter einzuschalten, um die Ausgangsseite des zweiten Verstärkungskreises (20b) auf die Spannung einzustellen, die höher als die Spannung an der Eingangsseite des zweiten Verstärkungskreises (20b) ist, und dadurch den Kurzschluss zwischen den Ausgangsanschlüssen der zweiten Stromversorgung (200b) zu erzeugen, um einen zweiten geschlossenen Stromkreis der zweiten Stromversorgung (200b) zu bilden, die Kurzschlussstromwert-Erfassungseinheit (104) einen zweiten Kurzschlussstromwert erfasst, der während eines Zeitraums durch den zweiten geschlossenen Stromkreis fließt, wenn der Controller (102) den ersten Schalter ein- und ausschaltet, um die Spannung an der Verbindungseinheit (30) zu steuern, und den zweiten Schalter einschaltet, um die Ausgangsseite des zweiten Verstärkungskreises (20b) auf die Spannung einzustellen, die höher ist als die Spannung auf der Eingangsseite des zweiten Verstärkungskreises (20b), und die Stromversorgungsanomalie-Bestimmungseinheit (106) dafür eingerichtet ist, auf der Grundlage eines Vergleichs zwischen dem zweiten Kurzschlussstromwert und einem zweiten Referenzstromwert zu bestimmen, ob die zweite Stromversorgung die Anomalie aufweist, wobei der zweite Referenzstromwert zuvor auf der Grundlage einer Kennlinie der zweiten Stromversorgung (200b) festgelegt wurde.

6. Leistungsaufbereiter (10) nach einem der Ansprüche 3 bis 5, wobei der zweite Verstärkungskreis (20b) des Weiteren einen zweiten Rückflussverhinderungskreis umfasst, der dafür eingerichtet ist, die Zufuhr des Stroms von der Ausgangsseite des zweiten Verstärkungskreises (20b) zu verhindern.

7. Leistungsaufbereiter (10) nach Anspruch 5 oder 6, wobei die Kurzschlussstromwert-Erfassungseinheit (104) dafür eingerichtet ist, einen Gesamtstromwert des ersten Kurzschlussstromwertes, der durch den ersten geschlossenen Stromkreis fließt, und des zweiten Kurzschlussstromwertes, der durch den zweiten geschlossenen Stromkreis fließt, zu erfassen, und
die Stromversorgungsanomalie-Bestimmungseinheit (106) den ersten Kurzschlussstromwert auf der Grundlage des Gesamtstromwertes und den zweiten Kurzschlussstromwert über einen Stromsensor (14a) erfasst.

8. Leistungsaufbereiter (10) nach Anspruch 7, wobei die Stromversorgungsanomalie-Bestimmungseinheit (106) dafür eingerichtet ist, den ersten Kurzschlussstromwert zu erfassen, indem sie den zweiten Kurzschlussstromwert vom Gesamtstromwert subtrahiert.

9. Leistungsaufbereiter (10) nach Anspruch 1 oder 2, wobei der Controller (102) dafür eingerichtet ist, den Inverter (40) zu veranlassen, eine Leistung von der Systemstromversorgung (300) auf die Seite der Verbindungseinheit (30) auszugeben, und die Spannung an der Verbindungseinheit (30) so steuert, dass die Ausgangsseite des ersten Verstärkungskreises (20a) auf die Spannung eingestellt wird, die höher ist als die Spannung auf der Eingangsseite des ersten Verstärkungskreises (20a).

10. Photovoltaik-System, umfassend:
a) eine erste Photovoltaik-Zelle der ersten Stromversorgung (200a); und
b) den Leistungsaufbereiter (10) nach einem der Ansprüche 1 bis 9, der dafür eingerichtet ist, den von der ersten Photovoltaik-Zelle ausgegebenen Gleichstrom in Wechselstrom umzuwandeln und den Wechselstrom auf die Seite der Systemstromversorgung (300) auszugeben.

11. Photovoltaik-System, umfassend:
a) eine erste Photovoltaik-Zelle der ersten Stromversorgung (200a);
b) eine zweite Photovoltaik-Zelle der zweiten Stromversorgung (200b), die parallel zu der ersten Photovoltaik-Zelle geschaltet ist; und
c) den Leistungsaufbereiter (10) nach einem der Ansprüche 3 bis 8, der dafür eingerichtet ist, die von der ersten und der zweiten Photovoltaik-Zelle ausgegebenen Gleichströme in die Wechselströme umzuwandeln und die Wechselströme auf die Seite der Systemstromversorgung (300) auszugeben.

12. Anomaliebestimmungsverfahren zum Bestimmen einer Anomalie einer ersten Stromversorgung (200a), die mit einem Leistungsaufbereiter (10) verbunden ist, wobei der Leistungsaufbereiter umfasst: einen ersten Verstärkungskreis (20a), der einen ersten Schalter (Tra) umfasst, der zwischen Ausgangsanschlüssen der ersten Stromversorgung (200a) verbunden ist und dafür eingerichtet ist, den Gleichstrom von der ersten Stromversorgung (200a) durch Ein- und Ausschalten des ersten Schalters zu verstärken; einen Inverter (40), der dafür eingerichtet ist, den von dem ersten Verstärkungskreis (20a) ausgegebenen Gleichstrom in den Wechselstrom umzuwandeln, und eine Verbindungseinheit (30), die dafür eingerichtet ist, eine Ausgangsseite des ersten Verstärkungskreises (20a) und eine Eingangsseite des Inverters (40) zu verbinden; wobei der Leistungsaufbereiter (10) den von der ersten Stromversorgung (200a) ausgegebenen Gleichstrom verstärkt, den verstärkten Gleichstrom in einen Wechselstrom umwandelt und den umgewandelten Wechselstrom auf eine Seite einer Systemstromversorgung (300) ausgibt, wobei das Anomaliebestimmungsverfahren umfasst:
a) einen Schritt des Steuerns der Spannung an der Verbindungseinheit (30) durch Einschalten des ersten Schalters, um die Ausgangsseite des ersten Verstärkungskreises (20a) auf eine Spannung einzustellen, die höher als eine Spannung auf der Eingangsseite des ersten Verstärkungskreises (20a) ist, und dadurch einen Kurzschluss zwischen den Ausgangsanschlüssen der ersten Stromversorgung (200a) zu erzeugen, um einen ersten geschlossenen Stromkreis der ersten Stromversorgung (200a) zu bilden;
b) einen Schritt des Erfassens eines ersten Kurzschlussstromwertes, der durch den ersten geschlossenen Stromkreis in einem Zeitraum fließt, während dem der erste Schalter eingeschaltet ist, um die Ausgangsseite des ersten Verstärkungskreises (20a) auf die Spannung einzustellen, die höher ist als die Spannung auf der Eingangsseite des ersten Verstärkungskreises (20a); und
einen Schritt des Bestimmens, ob die erste Stromversorgung (200a) eine Anomalie aufweist, auf der Grundlage eines Vergleichs zwischen dem ersten Kurzschlussstromwert und einem ersten Referenzstromwert, wobei der erste Referenzstromwert zuvor auf der Grundlage einer Kennlinie der ersten Stromversorgung (200a) festgelegt wurde.

13. Anomaliebestimmungsverfahren nach Anspruch 12, wobei der Leistungsaufbereiter (10) des Weiteren einen zweiten Verstärkungskreis (20b) umfasst, die einen zweiten Schalter (Trb) umfasst, der zwischen Ausgangsanschlüssen einer zweiten Stromversorgung (200b) verbunden ist und dafür eingerichtet ist, den Gleichstrom von der zweiten Stromversorgung (200b) durch Ein- und Ausschalten des zweiten Schalters zu verstärken,
die Verbindungseinheit (30) die Ausgangsseite des ersten Verstärkungskreises (20a) und die Ausgangsseite des zweiten Verstärkungskreises (20b) miteinander parallel schaltet; und in dem Schritt des Bildens des ersten geschlossenen Stromkreises der zweite Schalter ein- und ausgeschaltet wird, um die Spannung an der Verbindungseinheit (30) zu steuern, und die Ausgangsseite des ersten Verstärkungskreises (20a) auf die Spannung eingestellt wird, die höher als die Spannung auf der Eingangsseite des ersten Verstärkungskreises (20a) ist.

14. Anomaliebestimmungsverfahren nach Anspruch 13, wobei in dem Schritt des Bildens des ersten geschlossenen Stromkreises der Inverter (40) veranlasst wird, die Spannung an der Verbindungseinheit (30) zu steuern, und die Ausgangsseite des ersten Verstärkungskreises (20a) auf die Spannung einstellt wird, die höher ist als die Spannung auf der Eingangsseite des ersten Verstärkungskreises (20a), wenn der zweite Schalter nicht ein- und ausgeschaltet werden kann, um die Spannung an der Verbindungseinheit (30) zu steuern, und wenn die Ausgangsseite des ersten Verstärkungskreises (20a) nicht auf die Spannung eingestellt werden kann, die höher ist als die Spannung auf der Eingangsseite des ersten Verstärkungskreises (20a).

15. Anomaliebestimmungsverfahren nach Anspruch 13 oder 14, des Weiteren umfassend:
einen Schritt des Ein- und Ausschaltens des ersten Schalters (Tra), um die Spannung an der Verbindungseinheit (30) zu steuern, um den zweiten Schalter einzuschalten, um die Ausgangsseite des zweiten Verstärkungskreises (20b) auf die Spannung einzustellen, die höher ist als die Spannung auf der Eingangsseite des zweiten Verstärkungskreises **(20b),** und dadurch den Kurzschluss zwischen den Ausgangsanschlüssen der zweiten Stromversorgung (200b) zu erzeugen, um einen zweiten geschlossenen Stromkreis der zweiten Stromversorgung (200b) zu bilden;
einen Schritt des Erfassens eines zweiten Kurzschlussstromwertes, der durch den zweiten geschlossenen Stromkreis in einem Zeitraum fließt, während dem der erste Schalter ein- und ausgeschaltet wird, um die Spannung an der Verbindungseinheit (30) zu steuern, und der zweite Schalter (Trb) eingeschaltet wird, um die Ausgangsseite des zweiten Verstärkungskreises (20b) auf die Spannung einzustellen, die höher ist als die Spannung auf der Eingangsseite des zweiten Verstärkungskreises (20b), und
einen Schritt des Bestimmens, ob die zweite Stromversorgung (200b) die Anomalie aufweist, auf der Grundlage eines Vergleichs zwischen dem zweiten Kurzschlussstromwert und einem zweiten Referenzstromwert, wobei der zweite Referenzstromwert zuvor auf der Grundlage einer Kennlinie der zweiten Stromversorgung (200b) festgelegt wurde.

## Revendications

1. Conditionneur de puissance (10) qui est destiné à amplifier un courant continu délivré par une première alimentation électrique (200a), dans lequel le conditionneur de puissance convertit le courant continu amplifié en un courant alternatif, et délivre le courant alternatif de conversion à une alimentation électrique de système (300), le conditionneur de puissance (10) comprenant :
a) un premier circuit d'amplification (20a) qui comprend un premier interrupteur (Tra) conçu pour être connecté entre les bornes de sortie de la première alimentation électrique (200a), et conçu pour amplifier le courant continu issu de la première alimentation électrique (200a) en mettant le premier interrupteur à l'état passant et bloqué ;
b) un onduleur (40) conçu pour convertir le courant continu délivré en sortie du premier circuit d'amplification (20a) en courant alternatif ;
c) une unité de connexion (30) conçue pour connecter un côté sortie du premier circuit d'amplification (20a) et un côté entrée de l'onduleur (40) ;
d) un dispositif de commande (102) conçu pour commander une tension au niveau de l'unité de connexion (30) en mettant le premier interrupteur à l'état passant afin de régler le côté sortie du premier circuit d'amplification (20a) à une tension supérieure à une tension du côté entrée du premier circuit d'amplification (20a), et en engendrant ainsi un court-circuit entre les bornes de sortie de la première alimentation électrique (200a) pour former un premier circuit fermé de la première alimentation électrique (200a) ;
e) une unité d'acquisition de valeur de courant de court-circuit (104) conçue pour acquérir une première valeur de courant de court-circuit circulant à travers le premier circuit fermé au cours d'une période où le dispositif de commande (102) met le premier interrupteur à l'état passant pour régler le côté sortie du premier circuit d'amplification (20a) à la tension supérieure à la tension du côté entrée du premier circuit d'amplification (20a) ; et
f) une unité de détermination d'anomalie d'alimentation électrique (106) conçue pour déterminer si la première alimentation électrique (200a) présente une anomalie, sur la base d'une comparaison entre la première valeur de courant de court-circuit et une première valeur de courant de référence, la première valeur de courant de référence étant préalablement fixée sur la base d'une caractéristique de la première alimentation électrique (200a).

2. Conditionneur de puissance (10) selon la revendication 1, dans lequel :
le premier circuit d'amplification (20a) comprend en outre un premier circuit antiretour, conçu pour empêcher le passage d'un courant provenant du côté sortie du premier circuit d'amplification (20a).

3. Conditionneur de puissance (10) selon la revendication 1 ou 2, comprenant en outre :
un second circuit d'amplification (20b) qui comprend un second interrupteur (Trb) conçu pour être connecté entre les bornes de sortie d'une seconde alimentation électrique (200b), et qui est conçu pour amplifier le courant continu issu de la seconde alimentation électrique (200b) en mettant le second interrupteur à l'état passant et bloqué, dans lequel :
l'unité de connexion (30) connecte le côté sortie du premier circuit d'amplification (20a) et un côté sortie du second circuit d'amplification (20b) en parallèle l'un de l'autre ;
et
le dispositif de commande (102) est conçu pour mettre à l'état passant et bloqué le second interrupteur afin de commander la tension au niveau de l'unité de connexion (30),
et de régler le côté sortie du premier circuit d'amplification (20a) à la tension supérieure à la tension du côté entrée du premier circuit d'amplification (20a).

4. Conditionneur de puissance (10) selon la revendication 3, dans lequel :
le dispositif de commande (102) est conçu pour commander l'onduleur (40) afin qu'il commande la tension au niveau de l'unité de connexion (30), et règle le côté sortie du premier circuit d'amplification (20a) à la tension supérieure à la tension du côté entrée du premier circuit d'amplification (20a), lorsque le dispositif de commande (102) met à l'état passant et bloqué le second interrupteur pour commander la tension au niveau de l'unité de connexion (30) et ne peut pas régler le côté sortie du premier circuit d'amplification (20a) à la tension supérieure à la tension du côté entrée du premier circuit d'amplification (20a).

5. Conditionneur de puissance (10) selon l'une quelconque des revendications 3 et 4, dans lequel :
le dispositif de commande (102) est conçu pour mettre le premier interrupteur à l'état passant et bloqué afin de commander la tension au niveau de l'unité de connexion (30), pour mettre à l'état passant le second interrupteur afin de régler le côté sortie du second circuit
d'amplification (20b) à la tension supérieure à la tension du côté entrée du second circuit d'amplification (20b), et engendrer ainsi le court-circuit entre les bornes de sortie de la seconde alimentation électrique (200b) afin de former un second circuit fermé de la seconde alimentation électrique (200b),
l'unité d'acquisition de valeur de courant de court-circuit (104) acquiert une seconde valeur de courant de court-circuit circulant à travers le second circuit fermé au cours d'une période où le dispositif de commande (102) met le premier interrupteur à l'état passant et bloqué pour commander la tension au niveau de l'unité de connexion (30) et met à l'état passant le second interrupteur pour régler le côté sortie du second circuit d'amplification (20b) à la tension supérieure à la tension du côté entrée du second circuit d'amplification (20b), et
l'unité de détermination d'anomalie d'alimentation électrique (106) est conçue pour déterminer si la seconde alimentation électrique présente l'anomalie, sur la base d'une comparaison entre la seconde valeur de courant de court-circuit et une seconde valeur de courant de référence, la seconde valeur de courant de référence étant préalablement fixée sur la base d'une caractéristique de la seconde alimentation électrique (200b).

6. Conditionneur de puissance (10) selon l'une quelconque des revendications 3 à 5, dans lequel :
le second circuit d'amplification (20b) comprend en outre un second circuit antiretour de courant, conçu pour empêcher le passage du courant provenant du côté sortie du second circuit d'amplification (20b).

7. Conditionneur de puissance (10) selon la revendication 5 ou 6, dans lequel :
l'unité d'acquisition de valeur de courant de court-circuit (104) est conçue pour acquérir une valeur de courant totale de la première valeur de courant de court-circuit circulant à travers le premier circuit fermé et de la seconde valeur de courant de court-circuit circulant à travers le second circuit fermé, et
l'unité de détermination d'anomalie d'alimentation électrique (106) acquiert la première valeur de courant de court-circuit sur la base de la valeur de courant totale et
de la seconde valeur de courant de court-circuit, par l'intermédiaire d'un capteur de courant (14a).

8. Conditionneur de puissance (10) selon la revendication 7, dans lequel l'unité de détermination d'anomalie d'alimentation électrique (106) est conçue pour acquérir la première valeur de courant de court-circuit en soustrayant la seconde valeur de courant de court-circuit de la valeur de courant totale.

9. Conditionneur de puissance (10) selon la revendication 1 ou 2, dans lequel :
le dispositif de commande (102) est conçu pour commander l'onduleur (40) afin de délivrer une puissance depuis l'alimentation électrique de système (300) au côté de l'unité de connexion (30), et commande la tension au niveau de l'unité de connexion (30) pour régler le côté sortie du premier circuit d'amplification (20a) à la tension supérieure à la tension du côté entrée du premier circuit d'amplification (20a).

10. Système photovoltaïque comprenant :
a) une première cellule photovoltaïque de la première alimentation électrique (200a) ; et
b) le conditionneur de puissance (10) selon l'une quelconque des revendications 1 à 9, conçu pour convertir le courant continu délivré par la première cellule photovoltaïque en courant alternatif et pour délivrer le courant alternatif au côté de l'alimentation électrique de système (300).

11. Système photovoltaïque comprenant :
a) une première cellule photovoltaïque de la première alimentation électrique (200a) ;
b) une seconde cellule photovoltaïque de la seconde alimentation électrique (200b) connectée en parallèle de la première cellule photovoltaïque ; et
c) le conditionneur de puissance (10) selon l'une quelconque des revendications 3 à 8, conçu pour convertir les courants continus délivrés par les première et seconde cellules photovoltaïques en courants alternatifs et pour délivrer les courants alternatifs au côté de l'alimentation électrique de système (300).

12. Procédé de détermination d'anomalie, permettant de déterminer une anomalie de première alimentation électrique (200a) connectée à un conditionneur de puissance (10), le conditionneur de puissance comprenant un premier circuit d'amplification (20a) qui comprend le premier interrupteur (Tra) connecté entre les bornes de sortie de la première alimentation électrique (200a), et qui est conçu pour amplifier le courant continu provenant de la première alimentation électrique (200a) en mettant le premier interrupteur à l'état passant et bloqué, un onduleur (40) conçu pour convertir le courant continu délivré en sortie du premier circuit d'amplification (20a) en courant alternatif, et une unité de connexion (30) conçue pour connecter un côté sortie du premier circuit d'amplification (20a) et un côté entrée de l'onduleur (40) ; le conditionneur de puissance (10) amplifiant le courant continu délivré par la première alimentation électrique (200a), convertissant le courant continu amplifié en un courant alternatif, et délivrant le courant alternatif de conversion à un côté d'alimentation électrique de système (300), le procédé de détermination d'anomalie comprenant :
a) une étape consistant à commander la tension au niveau de l'unité de connexion (30) en mettant le premier interrupteur à l'état passant pour régler le côté sortie du premier circuit d'amplification (20a) à une tension supérieure à une tension du côté entrée du premier circuit d'amplification (20a), et en engendrant ainsi un court-circuit entre les bornes de sortie de la première alimentation électrique (200a) pour former un premier circuit fermé de la première alimentation électrique (200a) ;
b) une étape consistant à acquérir une première valeur de courant de court-circuit circulant à travers le premier circuit fermé au cours d'une période où le premier interrupteur est mis à l'état passant pour régler le côté sortie du premier circuit d'amplification (20a) à la tension supérieure à la tension du côté entrée du premier circuit d'amplification (20a) ; et
une étape consistant à déterminer si la première alimentation électrique (200a) présente une anomalie, sur la base d'une comparaison entre la première valeur de courant de court-circuit et une première valeur de courant de référence, la première valeur de courant de référence étant préalablement fixée sur la base d'une caractéristique de la première alimentation électrique (200a).

13. Procédé de détermination d'anomalie, selon la revendication 12, dans lequel :
le conditionneur de puissance (10) comprend en outre un second circuit d'amplification (20b) qui comprend un second interrupteur (Trb) connecté entre les bornes de sortie d'une seconde alimentation électrique (200b) et qui est conçu pour amplifier le courant continu issu de la seconde alimentation électrique (200b) en mettant le second interrupteur à l'état passant et bloqué,
l'unité de connexion (30) connecte le côté sortie du premier circuit d'amplification (20a) et le côté sortie du second circuit d'amplification (20b) en parallèle l'un de l'autre ;
et
à l'étape de formation du premier circuit fermé, le second interrupteur est mis à l'état passant et bloqué pour commander la tension au niveau de l'unité de connexion (30), et le côté sortie du premier circuit d'amplification (20a) est réglé à la tension supérieure à la tension du côté entrée du premier circuit d'amplification (20a).

14. Procédé de détermination d'anomalie, selon la revendication 13, dans lequel :
à l'étape de formation du premier circuit fermé,
l'onduleur (40) est commandé pour commander la tension au niveau de l'unité de connexion (30), et le côté sortie du premier circuit d'amplification (20a) est réglé à la tension supérieure à la tension du côté entrée du premier circuit d'amplification (20a), lorsque le second interrupteur ne peut pas être mis à l'état passant et bloqué pour commander la tension au niveau de l'unité de connexion (30) et lorsque le côté sortie du premier circuit d'amplification (20a) ne peut pas être réglé à la tension supérieure à la tension du côté entrée du premier circuit d'amplification (20a).

15. Procédé de détermination d'anomalie, selon la revendication 13 ou 14, comprenant en outre :
une étape consistant à mettre le premier interrupteur (Tra) à l'état passant et bloqué pour commander la tension au niveau de l'unité de connexion (30) pour mettre le second interrupteur à l'état passant afin de régler le côté sortie du second circuit d'amplification (20b) à la tension supérieure à la tension du côté entrée du second circuit d'amplification (**20b**), et engendrer ainsi le court-circuit entre les bornes de sortie de la seconde alimentation électrique (200b) afin de former un second circuit fermé de la seconde alimentation électrique (200b) ;
une étape consistant à acquérir une seconde valeur de courant de court-circuit circulant à travers le second circuit fermé au cours d'une période où le premier interrupteur est mis à l'état passant et bloqué pour commander la tension au niveau de l'unité de connexion (30) et le second interrupteur (Trb) est mis à l'état passant pour régler le côté sortie du second circuit d'amplification (20b) à la tension supérieure à la tension du côté entrée du second circuit d'amplification (20b), et
une étape consistant à déterminer si la seconde alimentation électrique (200b) présente l'anomalie, sur la base d'une comparaison entre la seconde valeur de courant de court-circuit et une seconde valeur de courant de référence, la seconde valeur de courant de référence étant préalablement fixée sur la base d'une caractéristique de la seconde alimentation électrique (200b).
